(19) Europäisches Patentamt
European Patent Office
Office européen des brevets

(11)  **EP 3 129 713 B1**

(12)  **FASCICULE DE BREVET EUROPEEN**

(45) Date de publication et mention
de la délivrance du brevet:
**25.09.2019  Bulletin 2019/39**

(51) Int Cl.:
*F23R 3/04* *(2006.01)*     *F23R 3/50* *(2006.01)*
*F23R 3/54* *(2006.01)*     *F04D 29/44* *(2006.01)*

(21) Numéro de dépôt: **15719805.2**

(22) Date de dépôt: **07.04.2015**

(86) Numéro de dépôt international:
**PCT/FR2015/050882**

(87) Numéro de publication internationale:
**WO 2015/155452 (15.10.2015 Gazette 2015/41)**

(54) **MOTEUR D'AERONEF COMPRENANT UN CALAGE AZIMUTAL DU DIFFUSEUR PAR RAPPORT A LA CHAMBRE DE COMBUSTION**

FLUGZEUGTRIEBWERK MIT AZIMUTEINSTELLUNG DES DIFFUSORS IN BEZUG AUF DIE BRENNKAMMER

AIRCRAFT ENGINE COMPRISING AZIMUTH SETTING OF THE DIFFUSER WITH RESPECT TO THE COMBUSTION CHAMBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **09.04.2014   FR 1453165**

(43) Date de publication de la demande:
**15.02.2017   Bulletin 2017/07**

(73) Titulaire: **Safran Helicopter Engines**
**64510 Bordes (FR)**

(72) Inventeurs:
• **DUCHAINE, Patrick**
**64110 Gelos (FR)**
• **BERAT, Claude**
**64800 Igon (FR)**
• **VIGUIER, Christophe, Nicolas, Henri**
**64800 Arrosde Nay (FR)**

(74) Mandataire: **Brevalex**
**95, rue d'Amsterdam**
**75378 Paris Cedex 8 (FR)**

(56) Documents cités:
**EP-A1- 2 123 863      EP-A2- 1 790 828**
**FR-A1- 2 616 890      GB-A- 700 688**
**GB-A- 2 269 893      US-A1- 2007 235 373**

**Description**

Le sujet de l'invention présente est un moteur d'aéronef comprenant un calage azimutal entre le diffuseur et la chambre de combustion.

Les diffuseurs en question sont disposés sur la veine d'écoulement des gaz, entre les compresseurs et la chambre de combustion, et ils consistent en un ou plusieurs cercles d'aubes fixes, qui infléchissent l'écoulement des gaz sortant du compresseur en lui opposant des surfaces d'intrados courbes et concaves, avant de les laisser arriver à la chambre de combustion. Des chambres de combustion sont décrites dans les documents FR-2 881 813-A et FR-2 905 166-A. Il existe des diffuseurs dépourvus de propriété marquée d'infléchissement de l'écoulement, dont les aubes sont axiales et rectilignes (FR-2 616 890-A et GB-700 688-A).

On s'intéresse ici à prévenir des extinctions accidentelles de la chambre de combustion, consécutives à l'ingestion d'eau dans le moteur. Cette ingestion d'eau à une phase quelconque dans les moteurs d'aéronef peut provenir de causes diverses, dont le vol dans les intempéries (pluie, grêle, neige, brouillard ou nuages), une humidité ambiante élevée, ou des jaillissements d'eau au décollage par les roues (avion) ou par le rotor (hélicoptère). Elle peut modifier sensiblement les conditions de fonctionnement de la machine, nuire à la combustion et même l'empêcher complètement en éteignant la chambre. L'extinction peut être directe quand une grande quantité d'eau arrive d'un coup dans la chambre de combustion, ou progressive, la température des gaz diminuant peu à peu et la combustion se faisant de plus en plus mal.

Parmi les mesures prises pour lutter contre ces difficultés, on a imaginé des prélèvements d'air dans les compresseurs, afin de soustraire une partie de l'air à l'extérieur de la veine, chargé en eau par la centrifugation produite par les compresseurs, et l'empêcher d'atteindre la chambre de combustion. Ces prélèvements ne sont toutefois pas toujours suffisants, et ne sont pas non plus prévus dans tous les moteurs. Un autre moyen pratiqué a consisté à faire ruisseler l'eau sur un carénage couvrant le fond de la chambre de combustion et situé devant le diffuseur. Un tel carénage n'est toutefois pas présent non plus sur tous les moteurs, et il peut être difficile à optimiser s'il est ajouté, les paramètres à considérer étant nombreux. Il doit de toute façon être percé, soit pour laisser le gaz comprimé entrer dans la chambre de combustion entre les injecteurs, soit pour assurer d'autres fonctions : son efficacité est donc douteuse à l'égard de la protection contre l'eau et l'humidité.

On recourt ici à une autre solution pour résoudre ce problème : on envisage ici d'introduire un calage azimutal entre les aubes du diffuseur et les injecteurs. En d'autres termes, la position angulaire des aubes du diffuseur est définie de façon à limiter l'accumulation d'eau devant les injecteurs et leur faire parvenir de l'air plus sec, tout en concentrant l'eau et en la laissant passer entre les injecteurs, sans qu'elle nuise donc à la combustion.

Pour résumer, l'invention est relative à un moteur d'aéronef comprenant une veine d'écoulement de gaz, une chambre de combustion située sur la veine d'écoulement et un diffuseur situé aussi sur la veine d'écoulement en amont de la chambre de combustion. Le diffuseur est composé d'aubes fixes infléchissant l'écoulement et disposées en un cercle. La chambre de combustion comprend des injecteurs de carburant présentant des orifices d'injection disposés en un cercle coaxial au cercle des aubes. Elle est caractérisée en ce que les aubes sont disposées angulairement par rapport aux injecteurs de façon que des trajectoires de l'écoulement originaires de bords de fuite des aubes aboutissent entre les injecteurs ; favorablement à des tiers médians de distances angulaires entre les injecteurs ; et encore plus favorablement, à mi-distances angulaires entre les injecteurs.

Il est fréquent que le diffuseur comporte une pluralité d'étages successifs. L'invention sera alors appliquée sur l'étage des diffuseurs qui modèle le plus l'écoulement en aval, fréquemment l'étage amont.

L'invention est fondée sur ce que l'eau concentrée dans l'écoulement passe devant l'intrados des aubes du diffuseur à cause de son inertie plus importante. Il est alors à prévoir que les lignes de courant, tracées à partir du bord de fuite des aubes, seront d'autant moins propices à l'extinction des chambres qu'elles passeront hors des injecteurs, et à une bonne distance angulaire entre les injecteurs, ou près de cette mi-distance. EP-2 123 863-A décrit un dispositif d'aubes de diffuseur à intrados, mais qui sont, prises globalement, dépourvues du calage azimutal favorable, caractéristique de l'invention.

L'invention va maintenant être décrite en détail au moyen des figures suivantes :

- les figures 1 et 2 sont des illustrations de chambres de combustion ;
- et la figure 3 est une illustration de l'invention, en représentation développée sur un plan d'une partie des cercles d'aubes et d'injecteurs, le plan étant défini par la direction axiale et la direction angulaire (azimutale) de la machine.

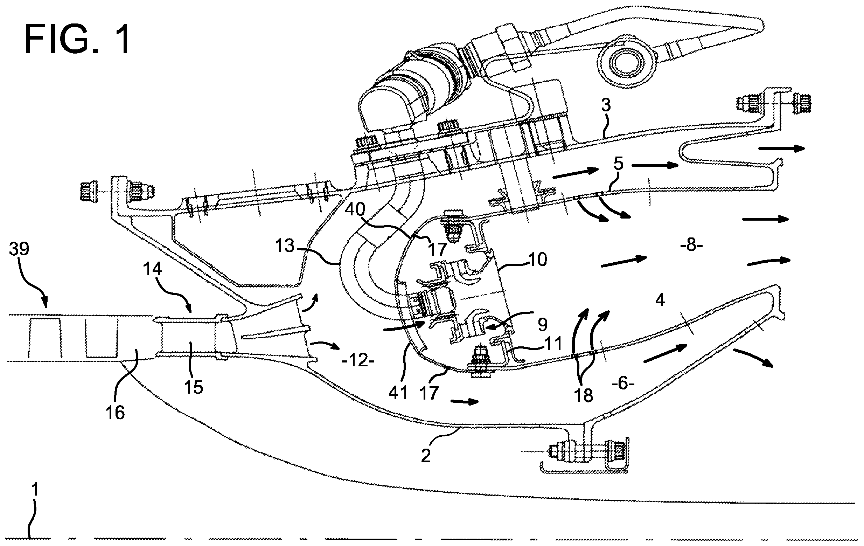

La figure 1 représente ici une chambre de combustion typique, comprenant, autour d'un axe 1 central, un carter intérieur 2, un carter extérieur 3, une virole intérieure 4, une virole extérieure 5, une veine de contournement intérieur 6 entre le carter intérieur et la virole intérieure 4, une veine de contournement extérieur 7 entre le carter extérieur 3 et la virole extérieure 5, une chambre de combustion 8 entre les viroles 4 et 5, des injecteurs 9 débouchant par des orifices d'injection 10 dans la chambre de combustion 8, une paroi de fond de chambre 11 joignant la virole intérieure 4 à la virole extérieure 5, mais percée pour laisser passer les injecteurs 9, une chambre de diffusion 12 présente entre le carter intérieur 2 et le carter extérieur 3, en amont de la chambre de combustion 8 et de la paroi de fond de chambre 11, traversée par des canalisations 13 d'alimentation en carburant des injecteurs 9, et un diffuseur 14 à l'entrée de la chambre de diffusion 12, occupé par des aubes fixes 15, disposées en cercle à travers une veine 16 d'écoulement des gaz originaires de compresseurs 39. Des carénages 40 couvrent ici les injecteurs 9 vers le diffuseur 14 de la virole intérieure 4 à la virole extérieure 5 ; leur forme est bombée, et ils sont pourvus d'ouvertures 41 assez larges autour des canalisations 13 et devant les injecteurs 9. L'air de la veine 16 contourne, pour partie, la chambre de combustion 8 par les veines de contournement interne 6 et externe 7, et y entre pour partie par les ouvertures 41, les orifices 10, et par des perçages tels que 17 et 18 traversant les viroles 4 et 5 et éventuellement le carénage 40 pour, selon le cas, former le mélange combustible avec le carburant, contribuer à une dilution de ce mélange en aval, ou rafraîchir les viroles 4 et 5 par un prélèvement de l'air plus frais des veines de contournement 6 et 7, en fonction des positions de ces perçages et de leurs inclinaisons par exemple ; des conceptions très nombreuses existent dans ce domaine.

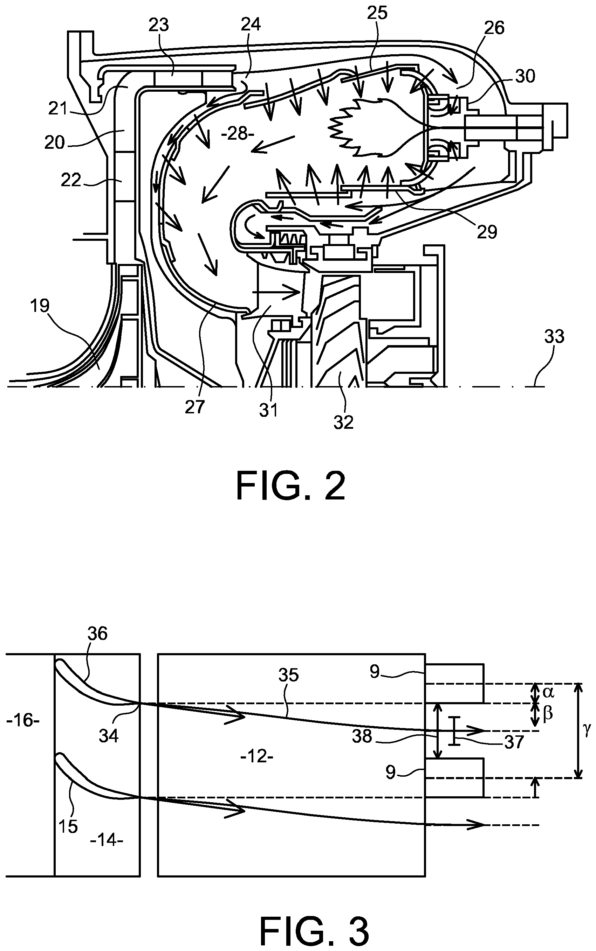

On mentionnera un autre genre de chambre à combustion, dite à écoulement inversé et représentée à la figure 2. Le compresseur 19 est ici axial ou centrifuge, et alimente une veine 20, d'abord plane et divergente, parcourue par un écoulement radial, puis annulaire, après un coude 21. Le diffuseur est ici composé d'un étage de diffuseur radial 22 en amont du coude 21, puis d'un étage de diffuseur axial 23, en aval. En sortant du diffuseur axial 23, l'air aboutit dans une chambre de diffusion 24, avant de contourner une virole amont 25, d'un côté ou de l'autre, axialement vers l'aval par une première veine de contournement 26, ou radialement vers l'extérieur par une seconde veine de contournement 27. La virole amont 25 a une section incurvée assez proche d'un demi-cercle. Une chambre de combustion 28 est présente entre la virole amont 25 et une virole aval 29, elle aussi incurvée et enveloppée par la précédente, de sorte que la chambre de combustion 28 forme un repli en demi-tour. Les injecteurs 30 de carburant sont ici disposés de façon à amorcer la combustion à une extrémité radialement extérieure et axialement aval de la chambre de combustion 28, en propulsant le carburant vers l'amont de la machine. Ils n'ont pas ici de carénage les couvrant. Les injecteurs 30 peuvent être également situés sur la virole amont 25. Les gaz de combustion circulent le long de la chambre de combustion 28, en faisant un demi-tour radialement vers l'intérieur et axialement vers l'aval, avant de la quitter par un distributeur 31, composé d'aubes fixes, pour atteindre des turbines 32. L'air entre dans la chambre de combustion 28 par divers perçages et ouvertures, de la même façon que dans l'autre conception. Dans toutes les conceptions, les diffuseurs 14, 22 et 23, de même que les injecteurs 9 et 30, sont disposés en cercles coaxiaux à l'axe 1 ou 33 de la machine.

On se reporte à la figure 3 pour l'explication de l'invention, en se servant par commodité des références de la figure 1, quoique l'invention soit généralisable à d'autres chambres de combustion, notamment celle de la figure 2, comme on le développera plus loin. L'écoulement dans la chambre de diffusion 12 est défini en direction angulaire par la forme des aubes fixes 15 et notamment leur inclinaison au bord de fuite 34. Les gouttes d'eau ont des composantes de vitesses axiales et qui leur font suivre des trajectoires 35 approximativement tangentes à cette inclinaison dans la chambre de diffusion 12. Certaines ont une composante radiale de vitesse suffisante pour contourner la chambre de combustion 8 en étant suffisamment infléchies par les courants de l'air, mais la plus grande partie est projetée par inertie vers la chambre de combustion 8, en pouvant donc atteindre les injecteurs 9 à travers les ouvertures 41, même quand le carénage 40 existe, et il apparaît le risque d'extinction de la chambre de combustion 8, l'humidité pouvant d'ailleurs aussi y entrer par les perçages 17 et 18. On remarquera que l'eau se concentrera près de l'intrados 36 des aubes fixes 15 à cause de son inertie ; elle suivra beaucoup plus volontiers les trajectoires 35 et leurs voisinages.

Conformément à l'invention, les aubes fixes 15 sont placées de manière que les trajectoires 35 passent à distance des injecteurs 9, entre eux, favorablement dans le tiers médian 37 de leurs intervalles 38, et de façon encore plus favorable au milieu de ces intervalles 38 ; si le pas angulaire des injecteurs 9 est égal à $\gamma$, et l'angle des trajectoires 35 entre les bords de fuite 34 et les injecteurs 9 est égal à $\beta$, le calage azimutal $\alpha$, c'est-à-dire l'angle entre les bords de fuite 34 et les injecteurs 9, sera au mieux choisi tel que $\alpha + \beta = \frac{\gamma}{2}$.

La situation est exactement la même pour une chambre à écoulement inversé comme celle de la figure 2, en considérant que les trajectoires 35 sont accomplies dans la chambre de diffusion 34 et dans la veine de contournement externe 26 jusqu'aux injecteurs 30.

Dans le cas où le diffuseur est composite, comme celui de la figure 2, le critère s'appliquera au diffuseur appliquant le plus fort infléchissement, c'est-à-dire en général le diffuseur le plus en amont, le diffuseur 22 radial dans le cas de la figure 2 ; si toutefois le diffuseur en aval (le diffuseur aval 23) effectue le plus fort infléchissement, c'est lui qui sera considéré.

Si nécessaire, les trajectoires 35 seront précisées par des calculs de modélisation des essais.

En passant à côté des injecteurs 9 ou 30, l'eau ruisselle le long de la chambre de combustion ou la contourne complètement avant de s'éloigner d'elle.

L'application de l'invention dépendra souvent de choix judicieux entre le nombre d'aubes du diffuseur et celui des injecteurs : ces nombres devront souvent admettre un diviseur commun, de manière à permettre des dispositions semblables de groupes des aubes par rapport à chacun des injecteurs. Une répartition irrégulière en direction angulaire des aubes pourra alors être choisie, les aubes étant absentes où les trajectoires 35 mèneraient aux injecteurs 30. Dans d'autres genres de réalisation, on pourra appliquer l'invention à l'égard de certains injecteurs seulement, qui seront alors des injecteurs principaux, les autres ayant un débit moindre. Les injecteurs étant disposés tous hors de portée des trajectoires 35 selon ce qui précède, des répartitions irrégulières des injecteurs en pas angulaires pourraient aussi être envisagées.

En règle générale, le calage azimutal suppose un « clocking » entre le nombre d'aubes du diffuseur et le nombre d'injecteurs (ces deux nombres ont un diviseur commun). Il existe cependant des cas particuliers pour lequel le « clocking » n'est pas nécessaire :

- dans le cas où il existe un injecteur privilégié (injecteur alimenté préférentiellement lors des régimes à basse puissance), le calage azimutal pourra être défini par rapport à cet injecteur particulier ;
- dans le cas où l'extinction est régie par la pénétration d'eau à travers des trous primaires, le calage azimutal pourra être défini à partir de ces trous primaires. Dans ce cas-là, les nombres de trous primaires et d'aubes doivent avoir un sous-multiple commun.

## Revendications

1. Moteur d'aéronef comprenant une veine (16, 20) d'écoulement de gaz, une chambre de combustion (8, 28) située sur la veine d'écoulement et un diffuseur (14, 22, 23) situé aussi sur la veine d'écoulement en amont de la chambre de combustion, ce diffuseur étant composé d'aubes (15) fixes pourvues d'une inclinaison en direction angulaire du moteur le long d'une direction axiale du moteur, ainsi que d'un intrados infléchissant l'écoulement et disposées en un cercle, la chambre de combustion comprenant des injecteurs (9, 30) de carburant disposés en un cercle coaxial au cercle des aubes, **caractérisé en ce que** les aubes (15) sont disposées angulairement par rapport aux injecteurs (9, 30) de façon que des trajectoires (35) de l'écoulement, originaires de bords de fuite (34) des aubes et de même inclinaison angulaire auxdits bords de fuite, tangentes aux intrados des aubes, aboutissent entre les injecteurs.

2. Moteur d'aéronef selon la revendication 1, **caractérisé en ce que** les lignes de l'écoulement aboutissent à des tiers médians de distances angulaires entre les injecteurs.

3. Moteur d'aéronef selon la revendication 2, **caractérisé en ce que** lesdites trajectoires aboutissent à mi-distances angulaires entres les injecteurs.

4. Moteur d'aéronef selon l'une quelconque des revendications 1 à 3, **caractérisé en ce que**, le diffuseur comportant une pluralité d'étages (22, 23) successifs, lesdites aubes appartiennent à un des étages sur la veine d'écoulement, cet étage appliquant le plus fort infléchissement à l'écoulement.

5. Moteur d'aéronef selon l'une quelconque des revendications 1 à 4, **caractérisé en ce que** les aubes (15) ont une répartition irrégulière en direction angulaire du moteur, les aubes étant absentes où les trajectoires (35) mèneraient aux injecteurs.

## Patentansprüche

1. Luftfahrzeug-Motor mit einer Gas-Strömungsbahn (16, 20), einer Brennkammer (8, 28), die sich in der Strömungsbahn befindet, und einem Diffusor (14, 22, 23), der sich ebenfalls in der Strömungsbahn in Strömungsrichtung vor der Brennkammer befindet, wobei dieser Diffusor aus feststehenden Schaufeln (15) besteht, die mit einer Winkelneigung zum Motor entlang einer axialen Richtung des Motors sowie mit einer inneren Wölbungsfläche versehen sind, die die Strömung umlenkt, und die in einem Kreis angeordnet sind, wobei die Brennkammer Brennstoff-Einspritzdüsen (9, 30) aufweist, die in einem zum Kreis der Schaufeln koaxialen Kreis angeordnet sind,

   **dadurch gekennzeichnet,**
   **dass** die Schaufeln (15) abgewinkelt zu den Einspritzdüsen (9, 30) angeordnet sind, dergestalt dass Bahnen (35) der Strömung, die von Austrittskanten (34) der Schaufeln und mit der gleichen Winkelneigung an diesen Austrittskanten, die tangential zu den inneren Wölbungsflächen der Schaufeln verlaufen, ausgehen, zwischen den Einspritzdüsen enden.

2. Luftfahrzeug-Motor nach Anspruch 1,

   **dadurch gekennzeichnet,**
   **dass** die Linien der Strömung jeweils bei einem Drittel der Winkeldistanz zwischen den Einspritzdüsen enden.

3. Luftfahrzeug-Motor nach Anspruch 2,

   **dadurch gekennzeichnet,**
   **dass** die genannten Bahnen jeweils in der Mitte der Winkeldistanz zwischen den Einspritzdüsen enden.

4. Luftfahrzeug-Motor nach einem der Ansprüche 1 bis 3,

   **dadurch gekennzeichnet,**
   **dass** in Anbetracht dessen, dass der Diffusor eine Mehrzahl von aufeinander folgenden Stufen (22, 23) aufweist, die genannten Schaufeln zu einer der Stufen in der Strömungsbahn gehören, wobei diese Stufe der Strömung die stärkste Ablenkung gibt.

5. Luftfahrzeug-Motor nach einem der Ansprüche 1 bis 4,

> **dadurch gekennzeichnet,**
> **dass** die Schaufeln (15) in Winkelrichtung des Motors eine ungleichmäßige Verteilung aufweisen, indem dort keine Schaufeln vorgesehen sind, wo die Bahnen auf die Einspritzdüsen gerichtet wären.

## Claims

1. Aircraft engine comprising a gas flow duct (16, 20), a combustion chamber (8, 28) located on the flow duct and a diffuser (14, 22, 23) also located on the flow duct upstream of the combustion chamber, with this diffuser being comprised of fixed vanes (15) provided with an inclination in an angular direction of the engine along an axial direction of the engine, and with a pressure side deflecting the flow and arranged in a circle, with the combustion chamber comprising fuel injectors (9, 30) arranged in a circle coaxial to the circle of the vanes, **characterised in that** the vanes (15) are arranged angularly with respect to the injectors (9, 30) in such a way that paths (35) of the flow, coming from the trailing edges (34) of the vanes and of the same angular inclination to said trailing edges, tangent to the pressure sides of the vanes, pass between the injectors.

2. Aircraft engine according to claim 1, **characterised in that** the flow lines pass at middle thirds of angular distances between the injectors.

3. Aircraft engine according to claim 2, **characterised in that** said paths pass at angular mid-way distances between the injectors.

4. Aircraft engine according to any of claims 1 to 3, **characterised in that**, the diffuser comprising a plurality of successive stages (22, 23), said vanes belong to one of the stages on the flow duct, with this stage applying the strongest altering to the flow.

5. Aircraft engine according to any of claims 1 to 4, **characterized in that** the vanes (15) have an irregular distribution in the angular direction of the engine, the vanes being absent where the paths would lead to the injectors.

FIG. 1

# FIG. 2

# FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2881813 A
- FR 2905166 A
- FR 2616890 A
- GB 700688 A
- EP 2123863 A